# EUROPEAN PATENT APPLICATION

(11) **EP 3 815 977 A1**
(43) Date of publication of application: **05.05.2021**
(21) Application number: 18923878.5
(22) Date of filing: 24.12.2018
(51) Int. Cl.: B60R 9/045

(54) **ROOF RACK STRUCTURE**

(30) Priority: 29.06.2018 CN 201810701570
(71) Applicant: Formosa Saint Jose Corp., Taipei, Taiwan 106 (TW)
(72) Inventor: YANG, Mingshun, Taipei, Taiwan 106 (TW)
(74) Representative: Jungblut & Seuss
(86) International application number: PCT/CN2018/123114
(87) International publication number: WO 2020/000939

(57) **Abstract**

The present invention discloses a roof panel structure formed by strong material and includes a bottom panel and two movable barrier rods fixed on the bottom panel. The two movable barrier rods are fixed on the two opposite sides of the bottom panel and can be inclined risen above or set flat on the bottom panel. With the implementation of the present invention, the movable barrier rods of the roof panel structure are raised to securely contain and protect small objects or luggage; while when long objects, such as ski boards or surfboards are to be loaded on the roof panel structure, at least one of the movable barrier rods can be easily set flat to provide more space in roof panel structure. Thus making the roof panel structure a multiple purpose roof panel structure.

## Description

### BACKGROUND OF THE INVENTION

### 1. Technical Field

The present invention relates to a panel structure, and more particularly, to a roof panel structure that contains at least one movable barrier rod.

### 2. Description of Related Art

As cars are being in wide use nowadays in recreation, consumers' demands for roof panels or roof top compartment are continuously increasing, especially when there's a need for carrying large cargos, such as ski boards, surfboards or other large size instruments of recreations.

While the roof panels used on cars nowadays are fixed frames with or without raised sides, used to contain small objects or long shaped objects, as a variety of objects to be contained in are so different in size or shape, changing between different roof panels for objects of different size or shape is the only solution till now.

However, every known existing roof panels of such in the market or being used are very difficult to be fixed, where the objects contained are also apt to vibration or wind and are easily loosened to endanger passengers in the car or the people or cars on the road.

That results in the needs for an innovation and improvement by inventing a new roof panel with movable barrier rods, that not only can be applied to almost all kinds of cars, with the creative invention of the movable barrier rods, objects of different size or shape to be contained can be firmly fixed and fastened on the roof panel by adjusting the movable barrier rods to different positions complied with the requirement of containing the objects.

### SUMMARY OF THE INVENTION

The present invention discloses a roof panel structure formed by strong material and includes a bottom panel and two movable barrier rods fixed on the bottom panel. The two movable barrier rods are fixed on the two opposite sides of the bottom panel and can be inclined risen above or set flat on the bottom panel. With the implementation of the present invention, the movable barrier rods of the roof panel structure are raised to securely contain and protect small objects or luggage; while when long objects, such as ski boards or surfboards are to be loaded on the roof panel structure, at least one of the movable barrier rods can be easily set flat to provide more space in roof panel structure. Thus making the roof panel structure a multiple purpose roof panel structure.

The present invention provides a roof panel structure, formed by a rigid material, comprising: a bottom panel; and two barrier rods, attached fixedly on the two opposite sides of the said bottom panel, wherein the two ends of each barrier rod are combined separately to the bottom panel at one side, wherein the barrier rods are movable barrier rods, and each of the said barrier rods is either risen inclined on the bottom panel or set flat on the bottom panel.

Implementation of the present invention at least involves the following inventive steps:
1. Movable barrier rods can be inclined risen to firmly contain and well protect bags, luggage or small cargos.
2. Movable barrier rods can be lowered flat to contain and protect long objects or large size objects such as ski boards or surfboards.

The features and advantages of the present invention are detailed hereinafter with reference to the preferred embodiments. The detailed description is intended to enable a person skilled in the art to gain insight into the technical contents disclosed herein and implement the present invention accordingly. In particular, a person skilled in the art can easily understand the objects and advantages of the present invention by referring to the disclosure of the specification, the claims, and the accompanying drawings.

### BRIEF DESCRIPTION OF THE SEVERAL VIEWS OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a schematic three-dimensional view of a roof panel structure according to an embodiment of the present invention.
FIG. 2 is a schematic side view of a roof panel structure according to an embodiment of the present invention.
FIG. 3 is a schematic three-dimensional view of a roof panel structure further includes barrier bars according to an embodiment of the present invention.
FIG. 4 is a schematic three-dimensional view of a bottom panel according to an embodiment of the present invention.
FIG. 5 is a schematic three-dimensional view of a roof panel structure with raised barrier rods fixed to the bottom panel by fixing pieces according to an embodiment of the present invention.
FIG. 6 is a schematic three-dimensional view of a roof panel structure with the barrier rods lowered flat and fixed to the bottom panel by fasteners according to an embodiment of the present invention.
FIG. 7 is a schematic three-dimensional view of a bottom panel combined with two different components according to an embodiment of the present invention.

### DETAILED DESCRIPTION OF THE EMBODIMENTS OF THE INVENTION

Embodiments with illustrating graphs are provided hereafter for further understanding and recognizing of the realization of the present invention.

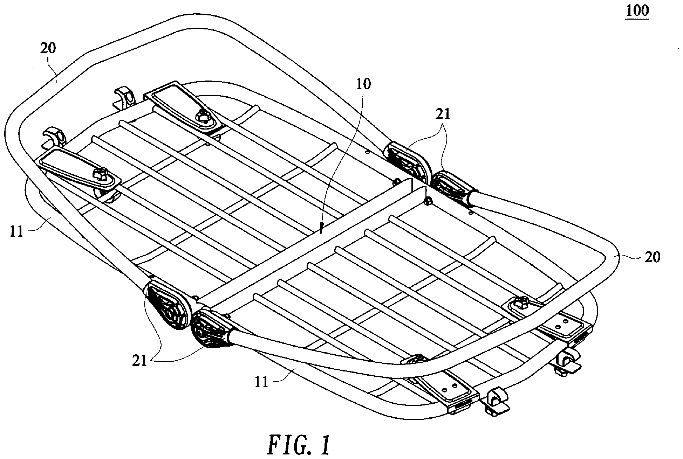

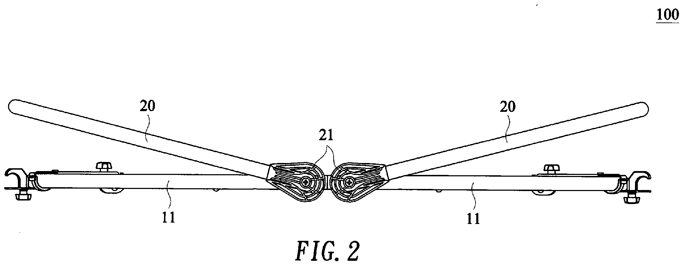

Please refer to FIG. 1 and FIG. 2, in an embodiment of the present invention, a multi-purpose roof panel structure 100 is provided to use on a car roof to contain firmly and protect objects, wherein roof panel structure 100 includes a bottom panel 10 and two barrier rods 20.

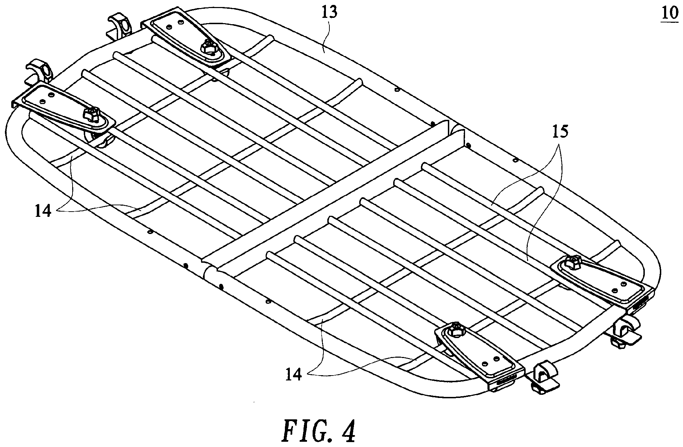

As shown in FIG. 1, FIG. 2 and FIG. 4, when made by one kind of rigid materials, the bottom panel 10 can be a frame 13 which is a fixed combination of plural horizontal bars 14 and plural vertical bars 15. While in other embodiments, the bottom panel 10 can also be a rigid plate.

As can be seen in FIG. 1 and FIG. 2, two barrier rods 20 are firmly fixed on two opposite sides 11 on the bottom panel 10 in the embodiment. Each barrier rod 20 is combined to the bottom panel 10 with its two ends 21. The said opposite sides 11 on the bottom panel 10 are normally the long sides on the bottom panel 10, while the position where the barrier rods 20 fixed to the bottom panel 10 can be on the side surface of the bottom panel 10.

As shown in FIG. 1 to FIG. 4, the said barrier rods 20 are movable barrier rods 20, which can be inclined rising above the roof panel structure 100 using its two ends 21 as pivots, or the movable barrier rods 20 can be set flat on the bottom panel 10 when required.

Further, there is no particular limitation for the choosing of the material for said barrier rods 20, light weight and rigid materials such as aluminum, alumina alloy or aluminum-magnesium alloy can normally be used. Wherein same material can be chosen for barrier rods 20 and the bottom panel 10 for the simplicity of preparation.

There is no particular limitation for the shape of the barrier rods 20, either. In the embodiment shown in the drawings, U-shape/ U-type barrier rods 20 are chosen.

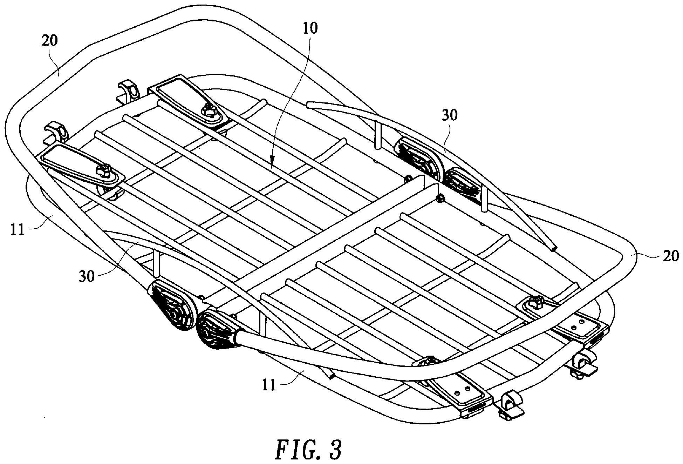

Please refer to FIG. 3, the roof panel structure 100 further includes two barrier bars 30 according to an embodiment of the present invention, each said barrier bar 30 is firmly combined on one side 11 of the bottom panel 10 where the two barrier rods 20 each rest one of its two ends 21 on.

The size or shape of the barrier bars 30 as shown in FIG.3 can be chosen as required by applications, curved, polygonal or irregular shape, or many other shapes can all be used. As for the material used for the barrier bars 30, any light weight and rigid material or same material as used for barrier rods 20 or bottom panel 10 can be chosen.

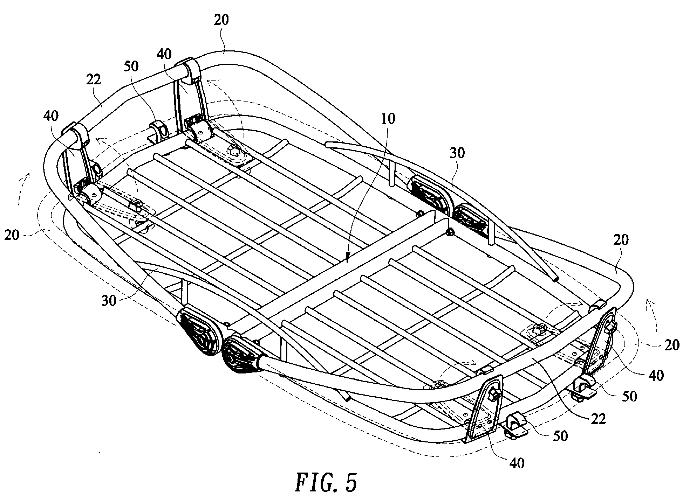

As shown in FIG. 5, in an embodiment of a roof panel structure 100, when any of the barrier rods 20 is inclined rising above the bottom panel 10, the barrier rod 20 is detachably fixed firmly from its bottom side 22 to the bottom panel 10 with at least one fixing piece 40.

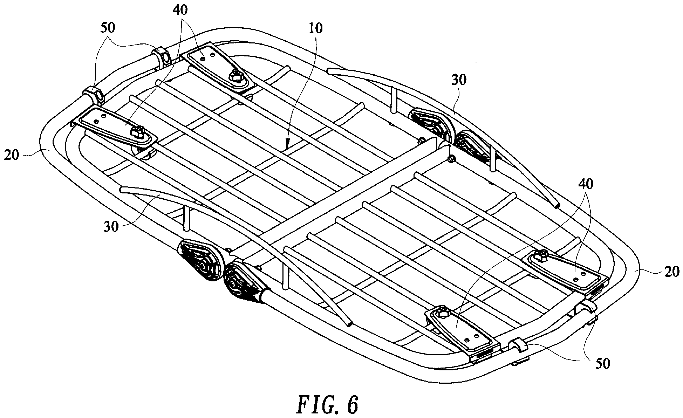

While as shown in FIG. 6, when the barrier rods 20 are set flat and rest on the bottom panel 10, each barrier rod 20 is fixed firmly on the bottom panel 10 with at least one fastener 50 in an embodiment of the present invention.

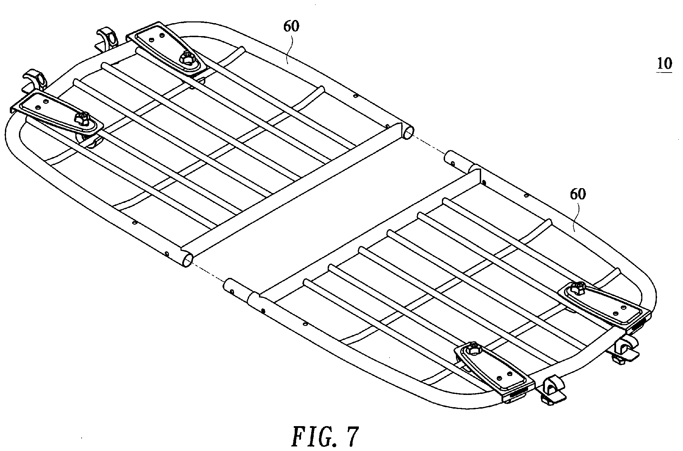

Furthermore, as further shown in FIG. 7, the bottom panel 10 of the roof panel structure 100 in an embodiment of the present invention can be composed of at least two components 60 for easiness or improving of safety for storage or transportation, or for prevention of collision when in storage or in transportation.

In conclusion, multiple improvements as follows, which cannot be achieved by known existing solutions, can be achieved by inclined rising or setting flat the barrier rods 20 of one single roof panel structure 100 in the present invention: Firstly, bags, luggage or small cargos can be firmly contained and well protected by the inclining raised barrier rods 20 together with the bottom panel 10. And secondly, the barrier rods 20 can be set flat and fixed on the bottom panel 10 to make the roof panel structure 100 firmly contain and well protect long objects or large size objects such as ski boards or surf boards.

The embodiments described above are intended only to demonstrate the technical concept and features of the present invention to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A multipurpose roof panel structure, formed by a rigid material, comprising:
a bottom panel; and
two barrier rods, attached fixedly on the two opposite sides of the said bottom panel, wherein the two ends of each barrier rod are combined separately to the bottom panel at one side;
wherein the barrier rods are movable barrier rods, and wherein each of the said barrier rods is either risen inclined on the bottom panel or set flat on the bottom panel.

2. The roof panel structure according to claim 1, further comprising two barrier bars, each said barrier bar is firmly combined on one side of the bottom panel where the two barrier rods each rest one of its two ends on.

3. The roof panel structure according to claim 1, wherein the bottom panel being a frame which is a fixed combination of plural horizontal bars and plural vertical bars.

4. The roof panel structure according to claim 1, wherein when any one of the barrier rods is inclined rising above the bottom panel, the barrier rod is detachably fixed firmly from its bottom side to the bottom panel with at least one fixing piece.

5. The roof panel structure according to claim 1, wherein the position where each of the barrier rods fixed to the bottom panel being on the side surface of the bottom panel.

6. The roof panel structure according to claim 2, wherein the shape of the said barrier bars being curved shape.

7. The roof panel structure according to any claim of claim 1 to claim 6, wherein when the barrier rods are set flat and rest on the bottom panel, each barrier rod being fixed firmly on the bottom panel with at least one fastener.

8. The roof panel structure according to any claim of claim 1 to claim 6, wherein the bottom panel of the roof panel structure being composed of at least two components.

9. The roof panel structure according to any claim of claim 1 to claim 6, wherein the shape of the barrier rods being U-shape/ U-type barrier rods.
